# EUROPÄISCHE PATENTSCHRIFT

(11) **EP 1 595 921 B1**
(45) Veröffentlichungstag und Bekanntmachung des Hinweises auf die Patenterteilung: **12.12.2018**
(21) Anmeldenummer: 05009959.7
(22) Anmeldetag: 06.05.2005
(51) Int. Cl.: C09C 1/00

(54) **Polychrome Pigmente**
multicoloured pigments
pigments polychromes

(30) Priorität: 14.05.2004 DE 102004024455
(43) Veröffentlichungstag der Anmeldung: 16.11.2005
(73) Patentinhaber: Merck Patent GmbH, 64293 Darmstadt (DE)
(72) Erfinder: Schmidt, Christoph, Dr., 65830 Kriftel (DE); Bischoff, Klaus Reinhard, Taipei (TW); Bernius, Helmut, 64354 Reinheim (DE)

(56) Entgegenhaltungen:
- EP-A- 0 659 843
- EP-A- 1 469 041
- WO-A-93/08237
- US-A- 4 047 969

## Beschreibung

Die vorliegende Erfindung betrifft polychrome Pigmente auf der Basis von mehrfarbigen Interferenzpigmenten.

Die wichtigste Klasse von Interferenzpigmenten sind die Perlglanzpigmente. Sie zeichnen sich durch glänzende Farben und eine ausgeprägte Tiefenwirkung aus. Die Wirkung wird durch eine Kombination von Interferenzeffekten und Transparenz hervorgerufen.

Da Glanz und Interferenz winkelabhängige Phänomene sind, ist auch der visuelle Eindruck eines Perlglanzpigmentes winkelabhängig. Die seit ca. 1970 auf dem Markt befindliche, wichtigste Form von Perlglanzpigmenten besteht aus kleinen Glimmerplättchen, die mit einer dünnen Schicht hochbrechender Metalloxide - im wesentlichen Titandioxid und/oder Eisenoxid - belegt sind. Die Winkelabhängigkeit dieser Pigmente beschränkt sich hauptsächlich auf einen Hell-/Dunkel-Effekt beim Übergang von einem steilen in einen flachen Beobachtungswinkel. Diese Pigmente können durch eine farbig absorbierende Belegung mit Absorptionsfarben kombiniert werden. Derartige Pigmente sind beispielsweise bekannt aus den deutschen Patentschriften DE 23 13 332, DE 29 28 287, DE 24 29 762, DE 33 34 596, EP 1254928 A1 und WO 93/08237. Die dabei entstehenden Produkte besitzen im wesentlichen eine Interferenzfarbe und eine Absorptionsfarbe.

Der Nachteil dieser Produkte liegt darin, dass die verwendeten Perlglanzpigmente bei flachen Beobachtungswinkeln dunkler werden und die Farbe des Absorptionspigmentes oftmals schmutzig und stumpf wirkt.

Aufgabe der vorliegenden Erfindung ist es koloristisch hochwertige Kombinationspigmente zur Verfügung zu stellen, die die beschriebenen Nachteile nicht aufweisen, sich durch ihre vorteilhaften Anwendungseigenschaften auszuzeichnen und gleichzeitig auf einfache Art und Weise hergestellt werden können.

Überraschenderweise wurden nun polychrome Pigmente auf Basis von mehrfarbigen Interferenzpigmenten gefunden, die zusätzlich mit einer selektiv oder nicht selektiv absorbierenden Schicht belegt sind, wodurch besondere Farbeffekte erzielt werden. Die erfindungsgemäßen polychromen Pigmente zeigen beim Übergang von steiler zu flacher Betrachtung im Unterschied zu den Pigmenten aus dem Stand der Technik einen attraktiven Farbeffekt. Durch die Kombination von Interferenzfarbe und Absorptionsfarbe treten neue Interferenzfarben auf, die sich mit der Absorptionsfarbe kombinieren und so zu einem bisher nicht erreichten, lebhaften Farbenspiel führen.

Gegenstand der Erfindung sind polychrome Pigmente gemäß Anspruch 1 auf Basis von Interferenzpigmenten.

Gegenstand der Erfindung ist weiterhin die Verwendung der erfindungsgemäßen Pigmente in Farben, Lacken, Druckfarben, Tinten, Kunststoffen, keramischen Materialien, Gläsern und zur Lasermarkierung und zum Laserschweißen. Aufgrund der hohen Farbkraft sind die erfindungsgemäßen Pigmente insbesondere für die pflegende und dekorative

Kosmetik geeignet. Weiterhin sind die erfindungsgemäßen Pigmente auch zur Herstellung von Trockenpräparaten, wie z.B. Granulaten, Chips, Pellets, Briketts, etc., geeignet. Die Trockenpräparate sind insbesondere für Druckfarben, Lacke und kosmetische Formulierungen geeignet.

Geeignete Basissubstrate für die erfindungsgemäßen farbigen Pigmente sind transparente plättchenförmige Substrate mit einer engen Dickenverteilung. Die Standardabweichung der Dicke der Substratplättchen beträgt ≤ 15 %, bevorzugt ≤ 10 % und besonders bevorzugt ≤ 6 % bezogen auf deren mittlere Dicke.

Weiterhin ist eine exakte Planarität der Einzelpartikel von Vorteil. Besonders geeignet sind natürlicher und/oder synthetischer Glimmer, Talkum, Kaolin, plättchenförmige Eisen- oder Aluminium-Oxide, Glas-, SiO₂-, TiO₂-, Graphitplättchen, synthetische trägerfreie Plättchen, BiOCI oder andere vergleichbare Materialien, insbesondere Glasplättchen, SiO₂-Plättchen, Al₂O₃-Plättchen und Plättchen aus basischem Bleicarbonat (PbCO₃ x Pb(OH)₂). Ganz besonders bevorzugt sind SiO₂-Plättchen, ferner Al₂O₃-Plättchen sowie Glasplättchen.

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 µm, vorzugsweise zwischen 0,05 und 4,5 µm und insbesondere zwischen 0,1 und 4 µm. Die Ausdehnung in den beiden anderen Bereichen beträgt üblicherweise zwischen 1 und 500 µm, vorzugsweise zwischen 2 und 250 µm, und insbesondere zwischen 5 und 100 µm.

Die hochbrechende Schicht (A) besitzt einen Brechungsindex von n > 1,8, vorzugsweise von n ≥ 2,0. Die Schicht (A) besteht aus
farblosen Metalloxiden, wie z. B. TiO₂, ZrO₂, SnO₂, ZnO, BiOCl bzw. Gemische oder Kombinationen davon. Besonders bevorzugt handelt es sich bei der Schicht (A) um eine TiO₂-Schicht. Das TiO₂ kann dabei in der Rutil- oder in der Anatasmodifikation vorliegen, vorzugsweise handelt es sich um Rutil.

Die Dicke der Schicht (A) beträgt vorzugsweise 10 bis 400 nm, insbesondere 20 nm bis 350 nm und ganz besonders bevorzugt 30 bis 250 nm.

Die Menge des absorbierenden Farbmittels (Schicht B) kann - bezogen auf das Basispigment - bevorzugt zwischen 0,1 bis 40 %, besonders bevorzugt zwischen 0,2 und 20 % und ganz besonders bevorzugt zwischen 0,5 und 15 % liegen. Der für ein bestimmtes Farbmittel günstigste Mengenbereich ist stark von dessen Absorptionsfarbe und Absorptionsintensität sowie der Farbe des Basispigmentes und anderen Faktoren, wie z.B. der spezifischen Oberfläche, abhängig. Für jede Kombination eines Interferenzpigmentes und eines Farbmittels sowie des angestrebten Anwendungsgebietes des neuen Produktes sind die günstigsten Mengenverhältnisse individuell zu bestimmen. Dabei kann in weiten Bereichen variiert werden.

Selbstverständlich können auch ein oder mehrere Interferenzpigmente mit mehreren oder einem Farbmittel kombiniert werden. Dazu können z.B. Gemische von verschiedenen Interferenzbasispigmenten mit Absorptionsschicht/en belegt werden, es können mehrere Farbmittel auf der Oberfläche des Interferenzpigmentes bzw. Interferenzpigmentgemisches aufgebracht werden.

Es handelt sich bei der Schicht (B) um Farbmittel aus der Gruppe Berliner Blau, Carminrot-Farblack, Indanthrenbrillantrosa, 1,4-Diketo-pyrrolopyrrol-Derivate, Derivate vom Thioindigo-, Indigo-, Triphenylmethan-, Azo-, Anthrachinon-, Phthalocyanin- oder Indanthrentyp, Fe₂O₃, Cr₂O₃, BiVO₄, CoAl₂O₄ und/oder Fe₃O₄. Im Falle der Belegung mit Eisenoxid als Absorptionsschicht bestehen durch die Art der Weiterbehandlung zusätzliche Variationsmöglichkeiten. Durch Glühung des Pigmentes nach dem Aufbringen der Eisenoxidschicht in oxidierender Atmosphäre (z.B. Luft) bildet sich durch Reaktion des Eisenoxides mit dem Titandioxid das rot-orange absorbierende Mischoxid Pseudobrookit TiFe₂O₃. Durch Glühung in reduzierender Atmosphäre wird ein Film von farblos absorbierendem Ilmenit (TiFeO₃) erhalten. In diesen und anderen Ausführungsformen bei denen hoch temperaturstabile absorbierende Überzüge zur Anwendung kommen, ist das Eintopfverfahren, d.h. die Aufbringung aller Schichten vor der Glühung, zu bevorzugen. Ist die absorbierende Schicht nicht temperaturstabil oder verbietet sich die abschließende Glühung aus anderen Gründen, ist das fertig geglühte Interferenzpigment in einer zweiten Herstellungsstufe mit dem absorbierenden Farbmittel zu belegen.

Besonders bevorzugte Farbpigmente weisen folgende Schichtenfolgen auf:
SiO₂-Plättchen + TiO₂ (A) + Berliner Blau (B)
SiO₂-Plättchen + TiO₂ (A) + Indigo (B)
SiO₂-Plättchen + TiO₂ (A) + 6,6'-Dichlor-4,4'-dimethyl-thioindigo (B)
SiO₂-Plättchen + TiO₂ (A) + Karminrot (B)
SiO₂-Plättchen + TiO₂ (A) + Cr₂O₃ (B)

Die erfindungsgemäßen Pigmente lassen sich relativ leicht herstellen. Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Bei der Nassbeschichtung werden die Substratpartikel in Wasser suspendiert und mit einem oder mehreren wasserlöslichen Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base oder Säure konstant gehalten. Anschließend werden die Pigmente abgetrennt, gewaschen und getrocknet und gegebenenfalls geglüht, wobei die Glühtemperatur in Hinblick auf die jeweils vorliegende Beschichtung optimiert werden kann. In der Regel liegen die Glühtemperaturen zwischen 250 und 1000 °C, vorzugsweise zwischen 350 und 900°C. Falls gewünscht, können die Pigmente nach Aufbringen einzelner Beschichtungen abgetrennt, getrocknet und ggf. geglüht werden, um dann zur Auffällung der weiteren Schicht(en) wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Die Herstellung von Ti-Suboxid-Schichten kann z.B. erfolgen durch Reduktion der TiO₂-Schicht mit Ammoniak, Wasserstoff sowie auch Kohlenwasserstoffen und Kohlenwasserstoff/Ammoniak-Gemischen wie z.B. beschrieben in EP-A-0 332 071, DE 19 51 696.8 und DE 19 51 697.7.

Der Farbton der Pigmente kann in weiten Grenzen durch unterschiedliche Wahl der Belegungsmengen bzw. der daraus resultierenden Schichten variiert werden. Die Feinabstimmung für einen bestimmten Farbton kann über die reine Mengenwahl hinaus durch visuell oder messtechnisch kontrolliertes Anfahren der gewünschten Farbe erreicht werden.

Die Belegung mit der Schicht (B) erfolgt wie in der Literatur beschrieben direkt auf dem Interferenzpigment. Häufig empfiehlt es sich vor der Belegung mit der Schicht (B) eine dünne Haftschicht auf die Oberfläche des Interferenzpigmentes aufzubringen, die Dicken < 10 nm aufweist und optisch inaktiv ist. Diese Haftschicht kann z.B. aus einem Oxid oder einem Alkylamin, z.B. Ethomeen® der Fa. Akzo Nobel, bestehen.

Zur Erhöhung der Licht-, Wasser- und Wetterstabilität empfiehlt es sich häufig, in Abhängigkeit vom Einsatzgebiet, das polychrome Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598, DE 40 30 727 A1, EP 0 649 886 A2 oder WO 97/29059 beschriebenen Verfahren in Frage. Durch diese Nachbeschichtung (Schicht C) wird die chemische Stabilität des polychromen Pigments weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus Al₂O₃ oder ZrO₂ oder deren Gemische bzw. Mischphasen auf die Pigmentoberfläche aufgebracht werden. Weiterhin sind organische, bzw. organisch/anorganisch kombinierte Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjee, Philips Technical Review, Vol. 44, No. 3, 81 ff. und P.H. Harding J.C. Berg, J. Adhesion Sci. Technol. Vol. 11 No. 4, S. 471-493.

Es versteht sich von selbst, dass für die verschiedenen Anwendungszwecke die erfindungsgemäßen Pigmente auch vorteilhaft in Abmischung mit Rußteilchen, Fluoreszenzpigmenten, organischen Farbstoffen, organischen Pigmenten oder anderen Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Glimmer- und SiO₂-Plättchen, etc., verwendet werden können. Die polychromen Pigmente können in jedem Verhältnis mit handelsüblichen Pigmenten und Füllern gemischt werden.

Die erfindungsgemäßen Pigmente sind weiterhin geeignet zur Herstellung von fließfähigen Pigmentpräparationen und Trockenpräparaten. Die Pigmentpräparationen und Trockenpräparate zeichnen sich dadurch aus, dass sie ein oder mehrere erfindungsgemäße Pigmente, Bindemittel und optional ein oder mehrere Additive enthalten.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben ist eine Vielzahl von Bindern, insbesondere wasserlösliche Typen, geeignet, wie sie z.B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein.

Für die Herstellung von pigmentierten Pasten, Anteigungen, Pigmentpräparationen und Trockenpräparate, wie z.B. Granulate; Pellets, Würstchen, etc., können alle handelsüblichen Bindemittel verwendet werden. Geignete Bindemittel sind bespielsweise auf der Basis von Cellulose und Cellulosederivaten, wie z.B. Cellulosenitrat, Alkylcellulose, Nitrocellulose, Hydroxidcellulose, Hydroxialkylcellulose und Celluloseacetobutyrat, Polyacrylat-Polymethacrylat-, Alkyd-, Polyester-, Polyphenol-, Harnstoff-, Melamin-, Polyterpen-, Polyvinyl-, Polyvinylchlorid, Polyvinylamid-, Polyvinylpyrrolidon-Harzen, Polystyrolen, Polyolefine, Cumaron-Inden-, Kohlenwasserstoff-, Keton-, Aldehyd-, Aromaten-Formaladehyd-Harzen, Carbamidsäure-, Sulfonamid-, Epoxid-Harzen, Polyurethanen, Kolophoniumharzen.

Zusätzlich können die Pigmentpräparationen eine Lösemittelkomponente enthalten, die auf das jeweilige Bindemittel fachgemäß abgestimmt werden muss. Bei der Herstellung können Wasser, alle organischen Lösemittel, vorzugsweise solche die mit Wasser emulgierbar oder mischbar sind, eingesetzt werden. Geeignete Lösemittel sind z.B. aromatische Lösungsmittel, z.B. Toluole, Benzine, Mineralöle, Kohlenwasserstoffe, Ester, pflanzliche Öle, einwertige aliphatische Alkohole, wie solche mit 2 bis 4 Kohlenstoffatomen, z.B. Ethanol, Butanol oder Isopropanol oder Ketone, z.B. Aceton oder Methylethylketon oder Glykolether, wie z.B. Propylenglycolmonoethylether, Propylenglycolmonoethylether oder Diole, wie z.B. Ethylenglykol und Propylenglykol oder Polyetherdiole, wie z.B. Polyethylenglykol, Polypropylenglykol und Polybutylenglykol, oder Polyole, wie z.B. alipathische Triole und Tetrole mit 2 bis 6 Kohlenstoffatomen, wie Trimethylolethan, Trimethylolpropan, Glycerin, 1,2,4-Butantriol, 1,2,6-Hexantinol und Pentaerythrit, sowie alle anderen Lösemittel anderer Verbindungsklassen bzw. der Gemische der vorgenannten Lösemittel. Vorzugsweise werden solche Lösemittel eingesetzt, die in Karsten, Lackrohstofftabellen, 8. Auflage 1987, aufgelistet sind. Insbesondere werden solche Lösungsmittel verwendet, die mit Wasser unbeschränkt mischbar sind.

Die Pigmentpräparationen enthalten in der Regel 1 bis 40 Gew.% eines Lösemittels bzw. Lösemittelgemisches, vorzugsweise 5 bis 35 Gew.%, insbesondere 10 bis 30 Gew.%. Die Trockenpräparate enthalten 0-10 Gew.%, vorzugsweise < 6 Gew.% an Lösemittel bezogen auf das Trockenpräparat.

Abhängig von der Art des eingesetzten Bindemittels ist der Zusatz von Neutralisationsmitteln erforderlich, aber auch unabhängig davon hat es sich bei der Herstellung der Pigmentpräparation häufig als vorteilhaft erwiesen, der Präparation einen pH-Regler zuzusetzen. Geeignet sind insbesondere die auf dem Lacksektor üblichen Basen, wie z.B. Harnstoff, Harnstoffderivate, Ammoniak, Aminoalkohole, Alkalihydroxide, wie z.B. KOH oder NaOH, Amine, wobei es sich bevorzugt um flüchtige organische niedermolekulare Amine handelt. Der pH-Wert kann auch durch die Zugabe von Mineralsäuren, wie z. B. H₂SO₄, HCl, HNO₃, oder organische Carbonsäuren, wie z. B Essigsäure, auf den gewünschten pH-Wert eingestellt werden.

Das erfindungsgemäße polychrome Pigment kann zur Pigmentierung von Lacken, Druckfarben, Kunststoffen, für Anwendungen im Agrarbereich, z.B. für Gewächshausfolien, sowie z.B. für die Farbgebung von Zeltplanen, Saatgutbeschichtung, Lebensmitteleinfärbungen, Knopfpasten, Arzneimittelüberzügen oder kosmetischen Formulierungen, wie Lippenstifte, Nagellacke, Presspuder, Shampoos, lose Puder und Gele, verwendet werden. Die Konzentration des Pigments im zu pigmentierenden Anwendungssystem liegt in der Regel zwischen 0,1 und 70 Gew.%, vorzugsweise zwischen 0,1 und 50 Gew.% und insbesondere zwischen 0,5 und 10 Gew.%, bezogen auf den Gesamtfestkörpergehalt des Systems. Sie ist in der Regel abhängig vom konkreten Anwendungsfall.

Kunststoffe enthaltend das erfindungsgemäße Pigment in Mengen von 0,01 bis 50 Gew. %, insbesondere 0,1 bis 7 Gew.%, zeichnen sich häufig durch einen besonders ausgeprägten Farbeffekt aus.

Im Lackbereich, insbesondere im Automobillack, wird das polychrome Pigment, auch für 3-Schichtaufbauten in Mengen von 0,1-10 Gew.%, vorzugsweise 1 bis 3 Gew.%, eingesetzt. Die Auswahl des Bindemittels richtet sich nach den technologischen Anforderungen der zu erzeugenden Beschichtung. So können übliche Lackbindemittel, wie z.B. Polyurethan-Acrylat-Harze, Acrylat-Melamin-Harze, Alkydharze, Polyesterharze, Polyurethane, Acrylatharze oder Epoxidharze sowie deren Gemische als Bindemittel eingesetzt werden. Weiterhin geeignet sind Nitrocellulose, Celluloseacetopropionat, -butyrat, Ketonharze, Aldehydharze sowie Polyvinylbutyral.

Im Lack hat das erfindungsgemäße Pigment den Vorteil, dass der angestrebte Glanz durch eine einschichtige Lackierung (Einschichtsystem bzw. Base coat im 2-Schichtaufbau) erzielt wird. Im Vergleich mit Lackierungen, die ein Mehrschichtpigment auf Basis von Glimmer enthalten, statt des erfindungsgemäßen Pigments, zeigen Lackierungen mit dem erfindungsgemäßen Pigment eine deutlichere Tiefenwirkung.

Das erfindungsgemäße polychrome Pigment kann auch vorteilhaft in der dekorativen und pflegenden Kosmetik eingesetzt werden. Die Einsatzkonzentration reicht von 0,01 Gew.% im Shampoo bis zu 100 Gew. % bei losen Pudern. Bei einer Mischung der polychromen Pigmente mit sphärischen Füllstoffen, z. B. SiO₂, kann die Konzentration bei 0,01-70 Gew.% in der Formulierung liegen. Die kosmetischen Produkte, wie z.B. Nagellacke, Lippenstifte, Seifen, Salben, Pasten, Stifte oder Tabletten, Presspuder, Sprays, Schäumen, Shampoos, lose Puder und Gele, zeichnen sich durch besonders interessante Glanzeffekte aus. Der Farbeffekt im Nagellack kann gegenüber herkömmlichen Nagellacken mit Hilfe der erfindungsgemäßen Pigmente deutlich gesteigert werden. Die kosmetischen Formulierungen können als ein- oder mehrphasige Systeme, wie bespielsweise Emulsionen, Suspensionen oder Aerosole vorliegen.

Das erfindungsgemäße Pigment kann weiterhin mit handelsüblichen Füllern gemischt werden. Als Füllstoffe sind z.B. zu nennen natürlicher und synthetischer Glimmer, Nylon Powder, reine oder gefüllte Melaminharze, Talcum, Gläser, Kaolin, Oxide oder Hydroxide von Aluminium, Magnesium, Calcium, Zink, BiOCI, Bariumsulfat, Calciumsulfat, Calciumcarbonat, Magnesiumcarbonat, Kohlenstoff, sowie physikalische oder chemische Kombinationen dieser Stoffe. Bezüglich der Partikelform des Füllstoffes gibt es keine Einschränkungen. Sie kann den Anforderungen gemäß z. B. plättchenförmig, sphärisch oder nadelförmig sein.

Selbstverständlich können die erfindungsgemäßen Pigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z. B. Verdicker und rheologische Zusatzstoffe wie etwa Bentonite, Hektorite, Siliciumdioxide, Ca-Silicate, Gelatinen, hochmolekulare Kohlenhydrate und/oder oberflächenaktive Hilfsmittel, etc.

Die die erfindungsgemäßen Pigmente enthaltenden Formulierungen können dem lipophilen, hydrophilen oder hydrophoben Typ angehören. Bei heterogenen Formulierungen mit diskreten wässrigen und nichtwässrigen Phasen können die erfindungsgemäßen Pigmente in jeweils nur einer der beiden Phasen enthalten oder auch über beide Phasen verteilt sein. Die pH-Werte der Formulierungen können zwischen 1 und 14, bevorzugt zwischen 2 und 11 und besonders bevorzugt zwischen 5 und 8 liegen.

Den Konzentrationen der erfindungsgemäßen Pigmente in der Formulierung sind keine Grenzen gesetzt. Sie können - je nach Anwendungsfall - zwischen 0,001 (rinse-off-Produkte, z.B. Duschgele) und 100 % (z.B. Glanzeffekt-Artikel für besondere Anwendungen) liegen.

Die erfindungsgemäßen Pigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E, etc.), Selbstbräuner (z.B. DHA, Erytrolyse, u.a.) sowie weitere kosmetische Wirkstoffe, wie z.B. Bisabolol, LPO, Ectoin, Emblica, Allantoin, Bioflavanoide und deren Derivate.

Gegenstand der Erfindung sind auch Formulierungen, insbesondere kosmetische Formulierungen, die die erfindungsgemäßen polychromen Pigmente und mindestens einen Bestandteil ausgewählt aus Absorptionsmittel, Adstringenzien, antimikrobiellen Stoffen, Antioxidantien, Antiperspirantien, Antischaummitteln, Antistatika, Bindemitteln, biologischen Zusatzstoffen, Bleichmitteln, Chelatbildnern, Desodorierungsmitteln, Emollentien, Emulgatoren, Emulsionsstabilisatoren, Farbstoffen, Feuchthaltemitteln, Filmbildnern, Geruchsstoffen, Geschmackstoffen, Insect Repellents, Konservierungsstoffen, Korrosionsschutzmitteln, kosmetischen Ölen, Lösungsmitteln, Oxidationsmitteln, pflanzlichen Bestandteilen, Puffersubstanzen, Reduktionsmitteln, Schleifmitteln, Selbstbräuner, Tensiden, Treibgasen, Trübungsmitteln, UV-Filtern und UV-Absorbern, Vergällungsmitteln, Viskositätsreglern und Vitaminen enthalten.

Weiterhin kann das erfindungsgemäße Pigment zur Veredlung von Lebensmitteln, z. B. Masse-Einfärbung und/oder Überzüge von Bonbons, Weingummi, wie z.B. Gummibärchen, Pralinen, Lakritze, Konfekt, Zuckerstangen, Brausegetränke, Limonaden, etc. oder als Überzug z.B. bei Dragees und Tabletten im Pharmabereich, eingesetzt werden.

Bei der Pigmentierung von Bindemittelsystemen z. B. für Farben und Druckfarben für den Tiefdruck, Offsetdruck oder Siebdruck, oder als Vorprodukt für Druckfarben, hat sich der Einsatz der erfindungsgemäßen polychromen Pigmente in Form von hochpigmentierten Pasten, Granulaten, Pellets, etc., als besonders geeignet erwiesen. Das Pigment wird in der Regel in die Druckfarbe in Mengen von 2-35 Gew.%, vorzugsweise 5-25 Gew.%, und insbesondere 8-20 Gew.% eingearbeitet. Offsetdruckfarben können die Pigmente bis zu 40 Gew.% und mehr enthalten. Die Vorprodukte für die Druckfarben, z.B. in Granulatform, als Pellets, Briketts, etc., enthalten neben dem Bindemittel und Additiven bis zu 98 Gew.% des erfindungsgemäßen Pigments. Die Druckfarben enthaltend das erfindungsgemäße Pigment zeigen reinere Farben als herkömmliche Effektpigmente. Die Partikeldicken der erfindungsgemäßen Pigmente sind relativ gering und bedingen daher eine besonders gute Verdruckbarkeit.

Für die Lasermarkierung und das Laserschweißen von Polymeren, insbesondere Kunststoffen, werden dem Polymer 0,005 bis 10 Gew.%, vorzugsweise 0,01 bis 5 Gew.% und ganz besonders bevorzugt 0,01 bis 3 Gew.% an polychromen Pigmenten bezogen auf den Kunststoff zugesetzt.

Gegenstand der Erfindung ist somit auch die Verwendung der Pigmente in Formulierungen wie Farben, Druckfarben, Lacken, Kunststoffen, keramischen Materialien, Gläsern, in kosmetischen Formulierungen, zur Lasermarkierung und zum Laserschweißen, zur Herstellung von Pigmentpräparationen und Trockenpräparaten.

Gegenstand der Erfindung sind somit auch alle dem Fachmann bekannten Formulierungen enthaltend das erfindungsgemäße polychrome Pigment.

Die nachfolgenden Beispiele sollen die Erfindung näher erläutern ohne sie jedoch zu beschränken.

### Beispiel 1

### Beispiel 1a Interferenzpigment mit Colortravel von intensiv Grün nach Rot

200 g SiO₂-Plättchen (Teilchengröße 5-50 µm, mittlere Dicke 450 nm, Standardabweichung der Dicke: ca. 5 %) werden in 4 I VE-Wasser suspendiert und unter starkem Rühren auf 80°C erhitzt. Zu dieser Mischung wird bei pH 1,6 eine Lösung von 24 g SnCl₄ x 5 H₂O und 80 ml Salzsäure (37 %) in 720 ml VE-Wasser zudosiert. Anschließend wird bei einem pH-Wert von 1,6 eine Menge von 920 ml TiCl₄-Lösung (400 g TiCl₄/l) zudosiert. Der pH-Wert wird bei der Zugabe der SnCl₄ x 5 H₂O-Lösung und TiCl₄-Lösung jeweils mit NaOH-Lösung (32 %) konstant gehalten. Anschließend wird der pH-Wert mit Natronlauge (32 %) auf 5,0 eingestellt und 15 Minuten nachgerührt. Zur Aufarbeitung wird das Pigment abfiltriert, mit 20 I VE-Wasser gewaschen, bei 110°C getrocknet und 30 min bei 850°C geglüht.

Man erhält ein Interferenzpigment mit intensiver brillantgrüner Farbe, starkem Glanz und hoher Transparenz. Beim Übergang zu flachen Beobachtungswinkeln zeigt das Pigment eine rote Interferenzfarbe.

### Beispiel 1b Beschichtung mit Karminrot-Farblack

200 g des Interferenzpigments aus Beispiel 1a) werden in 2000 ml vollentsalztem Wasser dispergiert und unter Rühren auf 75°C aufgeheizt. Nachdem der pH-Wert mit Natronlauge (32 %) auf 7,5 eingestellt wurde, werden 100 g Natronwasserglas-Lösung (5 % SiO₂) mit einer Geschwindigkeit von 3,3 ml/min zudosiert. Der pH-Wert wird mit Salzsäure (10 % HCl) konstant gehalten und nach beendeter Zugabe 60 Min. nachgerührt. Anschließend wird der pH-Wert mit Salzsäure (10 % HCl) auf 5,4 abgesenkt. Bei diesem pH-Wert werden gleichzeitig eine Lösung von 4,0 g Carmin Red in 350 ml Natronlauge (1,1 % NaOH) und eine Lösung von 14,12 g CaCl₂ x 2 H₂O und 3,53 g AlCl₃ x 6 H₂O in 350 ml vollentsalztem Wasser mit einer Dosierrate von jeweils 5,5 ml/min zudosiert.

Der pH-Wert wird dabei mit Salzsäure (10 % HCl) konstant bei 5,4 gehalten. Nach einer Nachrührzeit von 15 Minuten wird das Produkt auf einer Filternutsche filtriert, mit 20 l vollentsalztem Wasser gewaschen und 2 Stunden trocken gesaugt. Anschließend wird das Produkt 12 Stunden bei 80°C getrocknet und gesiebt (100 µm mesh).

Man erhält ein brillantgrünes Perlglanzpigment mit roter Körperfarbe. In der Anwendung, z.B. in Nagellackapplikationen, zeigt das Pigment bei Betrachtung im steilen Winkel eine intensiv grüne Glanzfarbe, die beim Abkippen in ein kräftiges Rot übergeht.

### Beispiel 2

### Beispiel 2a Interferenzpigment mit Colortravel von Blauviolett nach Grün

200 g SiO₂-Plättchen (Teilchengröße 5-50 µm, mittlere Dicke 450 nm, Standardabweichung der Dicke ca. 5 %) werden in 4 l VE-Wasser suspendiert und unter starkem Rühren auf 75°C erhitzt. Zu dieser Mischung wird bei pH 1,8 eine Lösung von 24 g SnCl₄ x 5 H₂O und 80 ml Salzsäure (37 %) in 720 ml VE-Wasser über einen Zeitraum von ca. 45 Minuten zudosiert. Anschließend wird bei einem pH-Wert von 1,3 eine Menge von 136 ml TiCl₄-Lösung (400 g TiCl₄/l) über einen Zeitraum von ca. 30 Minuten zudosiert. Der pH-Wert wird bei der Zugabe der SnCl₄ x 5 H₂O-Lösung und TiCl₄-Lösung jeweils mit NaOH-Lösung (32 %) konstant gehalten. Anschließend wird der pH-Wert mit Natronlauge (32 %) auf 6,0 eingestellt und 15 Minuten nachgerührt. Zur Aufarbeitung wird das Pigment abfiltriert, mit 20 l VE-Wasser gewaschen, bei 110°C getrocknet, 30 min bei 825°C geglüht und gesiebt (40 µm Maschenweite).

Man erhält ein hoch transparentes Interferenzpigment mit starkem Farbwechsel bei Variationen des Betrachtungswinkels.

### Beispiel 2b Beschichtung mit Karminrot-Farblack

Analog Beispiel 1b) werden 200 g Interferenzpigment aus Beispiel 2a) mit Karminrot-Farblack belegt.

Man erhält ein sehr transparentes Perlglanzpigment mit roter Körperfarbe, welcher eine stark winkelabhängige Interferenzfarbe in den Tönen blauviolett bis zu blassgrün überlagert ist.

### Beispiel 3

### Beispiel 3a Silber-Pigment mit Color Travel nach Rot

200 g SiO₂-Plättchen (Teilchengröße 5-50 µm, mittlere Dicke 450 nm, Standardabweichung der Dicke: 5 %) werden in 4 l VE-Wasser suspendiert und unter starkem Rühren auf 80°C erhitzt. Zu dieser Mischung wird bei pH 1,6 eine Lösung von 24 g SnCl₄ x 5 H₂O und 80 ml Salzsäure (37 %) in 720 ml VE-Wasser mit einer Geschwindigkeit von 8 ml/min zudosiert. Anschließend wird bei einem pH-Wert von 1,6 eine Menge von 700 ml TiCl₄-Lösung (400 g TiCl₄/l) mit einer Geschwindigkeit von 4 ml/min zudosiert. Der pH-Wert wird bei der Zugabe der SnCl₄ x 5 H₂O-Lösung und TiCl₄-Lösungen jeweils mit NaOH-Lösung (32 %) konstant gehalten. Anschließend wird der pH-Wert mit Natronlauge (32 %) auf 5,0 eingestellt und 15 Minuten nachgerührt. Zur Aufarbeitung wird das Pigment abfiltriert, mit 20 I VE-Wasser gewaschen, bei 110°C getrocknet und 30 min bei 850°C geglüht.

Das Produkt ist ein Interferenz-Silberpigment dessen Farbe sich bei schräger Betrachtung nach Rot verschiebt.

### Beispiel 3b Beschichtung mit Karminrot-Farblack

Analog Beispiel 1b) werden 200 g Interferenzpigment aus Beispiel 4a) mit Karminrot-Farblack belegt.

Man erhält ein sehr transparentes Perlglanzpigment mit roter Körperfarbe. In der Anwendung zeigt das Pigment bei Betrachtung im Glanzwinkel einen sehr deckenden Silbereffekt. Im flachen Betrachtungswinkel ist die Farbe kräftig rot.

### Beispiel 4

200 g Interferenzpigment aus Beispiel 1a werden in 2 l VE-Wasser suspendiert und unter kräftigem Rühren auf 70°C erwärmt. Bei dieser Temperatur wird der pH-Wert mit Schwefelsäure (10 %) auf pH 7,0 eingestellt. Bei diesem pH-Wert wird eine Lösung bestehend aus 2,6 g FeSO₄ x 2 H₂O, 0,06 g konz. Schwefelsäure (ca. 97 %) und 65 g VE-Wasser innerhalb ca. 45 Min. zudosiert. Dabei wird der pH-Wert mit Ammoniumhydroxid-Lösung (10 %) konstant gehalten. Anschließend wird innerhalb von ca. 70 Min. eine Lösung von 3,64 g K₄[Fe(CN₆] x 3 H₂O in 195 g VE-Wasser zudosiert und 30 Min. nachgerührt. Während der gesamten Reaktion wird Luft (4-6 l/(h) in die Suspension eingeblasen. Das Pigment wird auf einer Filternutsche abgesaugt, mit 30 I VE-Wasser gewaschen, 12 Stunden bei 100°C getrocknet und gesiebt (Maschenweite 100 µm).

Man erhält ein Pigmentpulver von blauer Farbe, das im Auftrag einen intensiven blaugrünen Glanz zeigt. Beim Übergang zu flachen Betrachtungswinkeln geht die Farbe in violett über.

### Beispiel 5 Beschichtung mit Berliner Blau

200 g Interferenzpigment aus Beispiel 3a werden in 2 l VE-Wasser suspendiert und unter kräftigem Rühren auf 70 °C erwärmt. Bei dieser Temperatur wird der pH-Wert mit Schwefelsäure (10 %) auf pH 7,0 eingestellt. Bei diesem pH-Wert wird eine Lösung bestehend aus 2,6 g FeSO₄ x 2 H₂O, 0,06 g Schwefelsäure (ca. 97 %) und 65 g VE-Wasser innerhalb ca. 45 Min. zudosiert. Dabei wird der pH-Wert mit Ammoniumhydroxid-Lösung (10 %) konstant gehalten. Anschließend wird innerhalb von ca.70 Min. eine Lösung von 3,64 g K₄[Fe(CN₆] x 3 H₂O in 195 g VE-Wasser zudosiert und 30 Min. nachgerührt. Während der gesamten Reaktion wird Luft (4-6 l/(h) in die Suspension eingeblasen. Das Pigment wird auf einer Filternutsche abgesaugt, mit 30 l VE-Wasser gewaschen, 12 Stunden bei 100 °C getrocknet und gesiebt (Maschenweite 100 µm).

Man erhält ein blaues Pigmentpulver mit kräftig hellblauem Silberglanz, der beim Abkippen in rotviolett übergeht.

### Beispiel 6 Beschichtung mit Berliner Blau

200 g Interferenzpigment aus Beispiel 2a werden in 2 l VE-Wasser suspendiert und unter kräftigem Rühren auf 70 °C erwärmt. Bei dieser Temperatur wird der pH-Wert mit Schwefelsäure (10 %) auf pH 7,0 eingestellt. Bei diesem pH-Wert wird eine Lösung bestehend aus 2,6 g FeSO₄ x 2 H₂O, 0,06 g konz. Schwefelsäure (ca. 97 %) und 65 g VE-Wasser innerhalb ca. 45 Min. zudosiert. Dabei wird der pH-Wert mit Ammoniumhydroxid-Lösung (10 %) konstant gehalten. Anschließend wird innerhalb von ca. 70 Min. eine Lösung von 3,64 g K₄[Fe(CN₆] x 3 H₂O in 195 g VE-Wasser zudosiert und 30 Min. nachgerührt. Während der gesamten Reaktion wird Luft (4-6 l/(h) in die Suspension eingeblasen. Das Pigment wird auf einer Filternutsche abgesaugt, mit 30 l VE-Wasser gewaschen, 12 Stunden bei 100°C getrocknet und gesiebt (Maschenweite 100 µm).

Es wird ein blauviolettes Glanzpigment erhalten, dessen Farbe beim Abkippen nach blaugrün wechselt.

### Beispiel 7 Beschichtung mit Indanthren Brillantrosa

200 g Interferenzpigment aus Beispiel 3a werden in 2000 ml vollentsalztem Wasser suspendiert und unter kräftigem Rühren auf 70°C erwärmt. Nun wird eine Suspension von 4 g Indanthren Brillantrosa (C&D Red 30) zugegeben, 15 Minuten nachgerührt, mit Schwefelsäure (10 %) auf pH 2,5 eingestellt und 1,6 ml Ethomeen S12 eingebracht. Nach weiteren 15 Minuten Nachrührzeit wird der pH-Wert mit Ammoniumhydroxid-Lösung (5 %) auf pH 5,0 eingestellt. Das Produkt wird auf einer Filternutsche abgesaugt, mit 6 I vollentsalztem Wasser gewaschen und 16 Stunden bei 100°C getrocknet. Anschließend wird das Pigment gesiebt (63 µm Maschenweite).

Man erhält ein Pigment mit roter Körperfarbe, das im steilen Betrachtungswinkel einen hellen Silberglanz zeigt. Im flachen Betrachtungswinkel geht die Farbe in ein kräftiges Rot über.

### Anwendungsbeispiele

### Beispiel A: Nagellack

| | |
|---|---|
| 2,00 % | Pigment aus Beispiel 1 (1) |
| 98,00 % | Thixotrope Nagellack-Base 1348 (Toluene, Ethyl acetate, Butyl acetate, Nitrocellulose, Tosylamide/-Formaldehyde, Resin, Dibutyl phthalate, Isopropyl alcohol, Stearalkonium hectorite, Camphor, Acrylates Copolymer, Benzophenone-1 (2) |

### Bezugsquellen:

(1) Merck KGaA
(2) International Lacquers S.A.

### Beispiel B: Lidschatten

**Phase A**

| | |
|---|---|
| 30,00 % | Pigment aus Beispiel 4 (1) |
| 49,50 % | Talc (1) |
| 7,50 % | Potato Starch (Solanum Tuberosum) (2) |
| 2,50 % | Magnesium stearate (1) |

**Phase B**

| | |
|---|---|
| 9,14 % | Isopropyl stearate (3) |
| 0,53 % | Cetyl palmitate (1) |
| 0,53 % | Ewalin 1751 (Petrolatum) (4) |
| 0,20 % | Fragrance Elegance # 79228 D MF (Parfum) (5) |
| 0,10 % | Propyl-4-hydroxybenzoate (Propylparaben) (1) |

Die Bestandteile der Phase A werden homogen gemischt. Anschließend wird die Pudermischung unter Rühren mit der geschmolzenen Phase B versetzt. Die Puder werden bei 40-50 bar gepresst.

### Bezugsquellen:

(1) Merck KGaA
(2) Südstärke GmbH
(3) Cognis GmbH
(4) H. Erhard Wagner GmbH
(5) Haarmann & Reimer GmbH

### Beispiel C: Lippenstift

**Phase A**

| | |
|---|---|
| 15,00 % | Pigment aus Beispiel 3 (1) |

**Phase B**

| | |
|---|---|
| 8,75 % | Beeswax white (Cera alba) (1) |
| 5,25 % | Paracera C 44 (Copernicia Cerifera (Carnauba wax, Ceresin) (2) |
| 3,50 % | Adeps Lanae (Lanolin) (3) |
| 5,60 % | Isopropyl myristate (4) |
| 2,10 % | Paraffin viscous (Paraffinum Liquidum (Mineral Oil) (1) |
| 0,05 % | OXYNEX® Kliquid (PEG-8, Tocopherol, Ascorbyl palmitate, Ascorbic acid, Citric acid) (1) |
| 0,10 % | Propyl-4-hydroxybenzoate (Propylparaben) (1) |
| 59,45 % | Castor Oil (Ricinus Communis) (3) |

### Phase C

0,20 % Fragrance Tendresse # 75418C (Parfum) (5)

Die Bestandteile der Phase B werden auf 75°C erhitzt und aufgeschmolzen. Die Pigmente der Phase A werden zugegeben und alles wird gut durchrührt. Die Lippenstiftmasse wird dann in der auf 65°C temperierten Gießapparatur mit dem Parfüm aus Phase C 15 Minuten gerührt. Die homogene Schmelze wird in die auf 55°C vorgewärmten Gießformen gegossen. Anschließend kühlt man die Formen ab und entfernt die Gießlinge kalt.

### Bezugsquellen:

(1) Merck KGaA
(2) Paramelt
(3) Henry Lamotte GmbH
(4) Cognis GmbH
(5) Haarmann & Reimer GmbH

## Patentansprüche

1. Polychrome Pigmente auf der Basis von Interferenzpigmenten,
**dadurch gekennzeichnet, dass** sie auf plättchenförmigen Substraten basieren, die eine Standardabweichung der Dicke der Substratplättchen von ≤ 15 % bezogen auf deren mittlere Dicke aufweisen,
(A) eine Beschichtung aus farblosen Metalloxiden mit einem Brechungsindex ≥ 1,8,
(B) eine selektiv oder nicht selektiv absorbierende Beschichtung wobei es sich bei der Schicht (B) um Berliner Blau, Carminrot-Farblack, Indanthrenbrillantrosa, 1,4-Diketo-pyrrolopyrrol-Derivate, Derivate vom Thioindigo-, Indigo-, Triphenylmethan-, Azo-, Anthrachinon-, Phthalocyanin- oder Indanthrentyp, Fe₂O₃, Cr₂O₃, BiVO₄, CoAl₂O₄ und/oder Fe₃O₄ handelt, und
(C) optional eine äußere Schutzschicht
enthalten.

2. Polychrome Pigmente nach Anspruch 1, **dadurch gekennzeichnet, dass** es sich bei den plättchenförmigen Substraten um natürlichen oder synthetischen Glimmer, Glas-, Al₂O₃-, SiO₂₋, BiOCI-, PbCO₃ x Pb(OH)₂ ("basisches Bleicarbonat") oder TiO₂-Plättchen oder deren Gemische handelt.

3. Polychrome Pigmente nach Anspruch 1 oder 2, **dadurch gekennzeichnet, dass** es sich bei den plättchenförmigen Substraten um SiO₂- oder Al₂O₃-Plättchen handelt.

4. Polychrome Pigmente nach einem oder mehreren der Ansprüche 1 bis 3, **dadurch gekennzeichnet, dass** die plättchenförmigen Substrate eine Dicke zwischen 0,05 und 5 µm aufweisen und die Ausdehnung in den beiden anderen Bereichen zwischen 1 und 500 µm beträgt.

5. Polychrome Pigmente nach einem oder mehreren der Ansprüche 1 bis 4, **dadurch gekennzeichnet, dass** die Schicht (A) aus TiO₂, ZrO₂, SnO₂, ZnO und/oder BiOCI besteht.

6. Polychrome Pigmente nach Anspruch 5, **dadurch gekennzeichnet, dass** das TiO₂ in der Schicht (A) in der Rutil- oder in der Anatasmodifikation vorliegt.

7. Polychrome Pigmente nach Anspruch 6, **dadurch gekennzeichnet, dass** das TiO₂ in der Rutilmodifikation vorliegt.

8. Polychrome Pigmente nach einem oder mehreren der Ansprüche 1 bis 7, **dadurch gekennzeichnet, dass** die Dicke der Schicht (A) 10 bis 400 nm beträgt.

9. Polychrome Pigmente nach einem oder mehreren der Ansprüche 1 bis 8, **dadurch gekennzeichnet, dass** vor der Belegung mit der Schicht (B) eine dünne Haftschicht auf die Oberfläche des Interferenzpigments aufgebracht wird, die eine Dicke < 10 nm aufweist und optisch inaktiv ist.

10. Polychrome Pigmente nach Anspruch 9, **dadurch gekennzeichnet, dass** es sich bei der Haftschicht um ein Oxid oder ein Alkylamin handelt.

11. Polychrome Pigmente nach einem oder mehreren der Ansprüche 1 bis 10, **dadurch gekennzeichnet, dass** sie folgende Zusammensetzung aufweisen:
SiO₂-Plättchen + TiO₂ (A) + Berliner Blau (B)
SiO₂-Plättchen + TiO₂ (A) + Indigo (B)
SiO₂-Plättchen + TiO₂ (A) + 6,6'-Dichlor-4,4'-dimethyl-thioindigo (B)
SiO₂-Plättchen + TiO₂ (A) + Karminrot (B)
SiO₂-Plättchen + TiO₂ (A) + Cr₂O₃ (B).

12. Verwendung der polychromen Pigmente nach einem oder mehreren der Ansprüche 1 bis 11 in Farben, Lacken, Druckfarben, Tinten, Kunststoffen, keramischen Materialien, Gläsern, in kosmetischen Formulierungen, zur Lasermarkierung und zum Laserschweißen und zur Herstellung von Pigmentpräparationen und Trockenpräparaten.

13. Pigmentpräparationen enthaltend ein oder mehrere Bindemittel, optional ein oder mehrere Additive und ein oder mehrere polychrome Pigmente nach einem oder mehreren der Ansprüche 1 bis 11.

14. Trockenpräparate wie Pellets, Granulate, Chips, Briketts enthaltend polychrome Pigmente nach einem oder mehreren der Ansprüche 1 bis 11.

15. Formulierungen enthaltend polychrome Pigmente nach einem oder mehreren der Ansprüche 1 bis 11 und mindestens einen Bestandteil ausgewählt aus Absorptionsmittel, Adstringenzien, antimikrobiellen Stoffen, Antioxidantien, Antiperspirantien, Antischaummitteln, Antistatika, Bindemitteln, biologischen Zusatzstoffen, Bleichmitteln, Chelatbildnern, Desodorierungsmitteln, Emollentien, Emulgatoren, Emulsionsstabilisatoren, Farbstoffen, Feuchthaltemitteln, Filmbildnern, Geruchsstoffen, Geschmackstoffen, Konservierungsstoffen, Korrosionsschutzmitteln, kosmetischen Ölen, Lösungsmitteln, Oxidationsmitteln, pflanzlichen Bestandteilen, Puffersubstanzen, Reduktionsmitteln, Schleifmitteln, Tensiden, Treibgasen, Trübungsmitteln, UV-Filtern und UV-Absorbern, Vergällungsmitteln, Viskositätsreglern und Vitaminen.

## Claims

1. Polychromic pigments based on interference pigments, **characterised in that** they are based on flake-form substrates which have a standard deviation of the thickness of the substrate flakes of ≤ 15%, based on their average thickness, comprise
(A) a coating of colourless metal oxides having a refractive index ≥ 1.8,
(B) a selectively or non-selectively absorbing coating, where layer (B) is Berlin Blue, Carmine Red lake, Indanthrene Brilliant Pink, 1,4-diketopyrrolopyrrole derivatives, derivatives of the thioindigo, indigo, triphenylmethane, azo, anthraquinone, phthalocyanine or indanthrene type, Fe₂O₃, Cr₂O₃, BiVO₄, CoAl₂O₄ and/or Fe₃O₄,
and
(C) optionally an outer protective layer.

2. Polychromic pigments according to Claim 1, **characterised in that** the flake-form substrates are natural or synthetic mica, glass flakes, Al₂O₃ flakes, SiO₂ flakes, BiOCl flakes, PbCO₃ x Pb(OH)₂ ("basic lead carbonate") or TiO₂ flakes or mixtures thereof.

3. Polychromic pigments according to Claim 1 or 2, **characterised in that** the flake-form substrates are SiO₂ flakes or Al₂O₃ flakes.

4. Polychromic pigments according to one or more of Claims 1 to 3, **characterised in that** the flake-form substrates have a thickness between 0.05 and 5 µm and the size in the other two dimensions is between 1 and 500 µm.

5. Polychromic pigments according to one or more of Claims 1 to 4, **characterised in that** layer (A) consists of TiO₂, ZrO₂, SnO₂, ZnO and/or BiOCI.

6. Polychromic pigments according to Claim 5, **characterised in that** the TiO₂ in layer (A) is in the rutile or anatase modification.

7. Polychromic pigments according to Claim 6, **characterised in that** the TiO₂ is in the rutile modification.

8. Polychromic pigments according to one or more of Claims 1 to 7, **characterised in that** the thickness of layer (A) is 10 to 400 nm.

9. Polychromic pigments according to one or more of Claims 1 to 8, **characterised in that**, before coating with layer (B), a thin adhesive layer which has a thickness < 10 nm and is optically inactive is applied to the surface of the interference pigment.

10. Polychromic pigments according to Claim 9, **characterised in that** the adhesive layer is an oxide or an alkylamine.

11. Polychromic pigments according to one or more of Claims 1 to 10, **characterised in that** they have the following composition:
SiO₂ flake + TiO₂ (A) + Berlin Blue (B)
SiO₂ flake + TiO₂ (A) + indigo (B)
SiO₂ flake + TiO₂ (A) + 6,6'-dichloro-4,4'-dimethylthioindigo (B)
SiO₂ flake + TiO₂ (A) + Carmine Red (B)
SiO₂ flake + TiO₂ (A) + Cr₂O₃ (B).

12. Use of the polychromic pigments according to one or more of Claims 1 to 11 in paints, coatings, printing inks, writing inks, plastics, ceramic materials, glasses, in cosmetic formulations, for laser marking and for laser welding and for the preparation of pigment preparations and dry preparations.

13. Pigment preparations comprising one or more binders, optionally one or more additives and one or more polychromic pigments according to one or more of Claims 1 to 11.

14. Dry preparations, such as pellets, granules, chips, briquettes, comprising polychromic pigments according to one or more of Claims 1 to 11.

15. Formulations comprising polychromic pigments according to one or more of Claims 1 to 11 and at least one constituent selected from absorbents, adstringents, antimicrobial substances, antioxidants, antiperspirants, antifoams, antistatics, binders, biological additives, bleaches, chelating agents, deodorisers, emollients, emulsifiers, emulsion stabilisers, dyes, humectants, film formers, fragrances, flavours, preservatives, anticorrosion agents, cosmetic oils, solvents, oxidants, vegetable constituents, buffer substances, reducing agents, abrasives, surfactants, propellant gases, opacifiers, UV filters and UV absorbers, denaturing agents, viscosity regulators and vitamins.

## Revendications

1. Pigments polychromes basés sur des pigments d'interférence, **caractérisés en ce qu'**ils sont basés sur des substrats sous forme de flocons qui présentent un écart type de l'épaisseur des flocons de substrat ≤ 15 %, sur la base de leur épaisseur moyenne, lesquels pigments polychromes comprennent :
(A) un revêtement en oxydes métalliques incolores présentant un indice de réfraction ≥ 1,8 ;
(B) un revêtement absorbeur de façon sélective ou non sélective, où la couche (B) est constituée par le bleu de Berlin, la laque de couleur rouge carmin, l'indanthrène rose brillant, les dérivés de 1,4-dicétopyrrolopyrrole, les dérivés du type thioindigo, indigo, triphénylméthane, azo, anthraquinone, phtalocyanine ou indanthrène, Fe₂O₃, Cr₂O₃, BiVO₄, CoAl₂O₄ et/ou Fe₃O₄;
et
(C) en option, une couche de protection externe.

2. Pigments polychromes selon la revendication 1, **caractérisés en ce que** les substrats sous forme de flocons sont mica naturel ou synthétique, des flocons de verre, d'Al₂O₃, de SiO₂, de BiOCl, PbCO₃ x Pb(OH)₂ ("céruse") ou de TiO₂ ou des mélanges afférents.

3. Pigments polychromes selon la revendication 1 ou 2, **caractérisés en ce que** les substrats sous forme de flocons sont des flocons de SiO₂ ou des flocons d'Al₂O₃.

4. Pigments polychromes selon une ou plusieurs des revendications 1 à 3, **caractérisés en ce que** les substrats sous forme de flocons présentent une épaisseur entre 0,05 et 5 µm et la taille suivant les autres dimensions est entre 1 et 500 µm.

5. Pigments polychromes selon une ou plusieurs des revendications 1 à 4, **caractérisés en ce que** la couche (A) est constituée par du TiO₂, du ZrO₂, du SnO₂, du ZnO et/ou du BiOCl.

6. Pigments polychromes selon la revendication 5, **caractérisés en ce que** le TiO₂ dans la couche (A) est selon la modification rutile ou anatase.

7. Pigments polychromes selon la revendication 6, **caractérisés en ce que** le TiO₂ est selon la modification rutile.

8. Pigments polychromes selon une ou plusieurs des revendications 1 à 7, **caractérisés en ce que** l'épaisseur de la couche (A) va de 10 à 400 nm.

9. Pigments polychromes selon une ou plusieurs des revendications 1 à 8, **caractérisés en ce que**, avant le revêtement avec la couche (B), une couche adhésive mince qui présente une épaisseur < 10 nm et qui est optiquement inactive est appliquée sur la surface du pigment d'interférence.

10. Pigments polychromes selon la revendication 9, **caractérisés en ce que** la couche adhésive est un oxyde ou un alkylamine.

11. Pigments polychromes selon une ou plusieurs des revendications 1 à 10, **caractérisés en ce qu'**ils présentent la composition qui suit :
flocon de SiO₂ + TiO₂ (A) + bleu de Berlin (B)
flocon de SiO₂ + TiO₂ (A) + indigo (B)
flocon de SiO₂ + TiO₂ (A) + 6,6'-dichloro-4,4'-diméthylthioindigo (B)
flocon de SiO₂ + TiO₂ (A) + rouge carmin (B)
flocon de SiO₂ + TiO₂ (A) + Cr₂O₃ (B).

12. Utilisation des pigments polychromes selon une ou plusieurs des revendications 1 à 11 dans des peintures, des revêtements, des encres d'impression, des encres d'écriture, des matières plastiques, des matériaux de céramique, des verres, au niveau de formulations cosmétiques, pour le marquage au laser et pour le soudage au laser ainsi que pour la préparation de préparations de pigments et de préparations sèches.

13. Préparations de pigments comprenant un ou plusieurs liant(s), en option un ou plusieurs additif(s) et un ou plusieurs pigment(s) polychrome(s) selon une ou plusieurs des revendications 1 à 11.

14. Préparations sèches, telles que des granulats, des granules, des copeaux, des briquettes, comprenant des pigments polychromes selon une ou plusieurs des revendications 1 à 11.

15. Formulations comprenant des pigments polychromes selon une ou plusieurs des revendications 1 à 11 et au moins un constituant qui est sélectionné parmi les absorbants, les astringents, les substances antimicrobiennes, les antioxydants, les anti-transpirants, les antimoussants, les agents antistatiques, les liants, les additifs biologiques, les agents de blanchiment, les agents chélatants, les désodorisants, les émollients, les émulsifiants, les stabiliseurs d'émulsion, les colorants, les agents humidifiants, les agents filmogènes, les fragrances, les arômes, les conservateurs, les agents anticorrosion, les huiles cosmétiques, les solvants, les oxydants, les composants végétaux, les substances tampon, les agents de réduction, les abrasifs, les agents tensioactifs, les gaz propulseurs, les opacifiants, les filtres UV et les absorbeurs d'UV, les agents de dénaturation, les régulateurs de viscosité et les vitamines.
